# EUROPÄISCHE PATENTSCHRIFT

(11) **EP 0 759 858 B1**
(45) Veröffentlichungstag und Bekanntmachung des Hinweises auf die Patenterteilung: **04.07.2001**
(21) Anmeldenummer: 95919347.5
(22) Anmeldetag: 27.04.1995
(51) Int. Cl.: B60Q 3/02, F21V 23/00

(54) **LEUCHTE MIT EINEM RÄUMLICH SPRITZGEGOSSENEN SCHALTUNGSTRÄGER,INSBESONDERE KFZ-INNENLEUCHTE**
LAMP WITH A TREE-DIMENSIONAL INJECTION-MOULDED CIRCUIT SUPPORT, IN PARTICULAR AN INTERIOR LIGHT FOR A VEHICLE
LAMPE A SUPPORT DE CIRCUIT TRIDIMENSIONNEL MOULE PAR INJECTION, NOTAMMENT LAMPE INTERIEURE POUR VEHICULE AUTOMOBILE

(30) Priorität: 05.05.1994 DE 4415885
(43) Veröffentlichungstag der Anmeldung: 05.03.1997
(73) Patentinhaber: Valeo Schalter und Sensoren GmbH, 74321 Bietigheim-Bissingen (DE)
(72) Erfinder: WEBER, Adam, D-74321 Bietigheim-Bissingen (DE)
(74) Vertreter: Dreiss, Fuhlendorf, Steimle & Becker
(86) Internationale Anmeldenummer: EP9501603
(87) Internationale Veröffentlichungsnummer: WO9530559

(56) Entgegenhaltungen:
- DE-A- 3 212 962
- FR-A- 2 108 708

## Beschreibung

Die Erfindung betrifft eine Leuchte mit einer Lampenhalterung, einem Reflektor und Verbindungsleitungen, insbesondere Kfz-Innenleuchte.

Die bisherigen Leuchten, insbesondere Innenleuchten für Kraftfahrzeuge, weisen eine große Anzahl von Einzelteilen auf. Dazu gehören Grundplatte, Leiterplatte, Kontaktstecker, Kontaktbuchse, Gehäuseabdeckungen, Reflektor und Schalter, die nur wenig ineinander integriert sind. Die Leuchten müssen somit aus einer größeren Anzahl von Einzelteilen aufwendig montiert werden.

Es ist bekannt, räumliche Gebilde, wie beispielsweise Kunststoffgehäuse, gleichzeitig zur direkten Aufnahme und Befestigung von Leiterbahnen und elektronischen Bauteilen zu verwenden, insbesondere spritzgegossene Leiterformkörper in das Gehäuse einzugießen. Diese Leiterformkörper, die in einer "two-shot"-Spritzgußtechnologie mit dem Kunststoffgehäuse vergossen werden, haben die Eigenschaft, daß ihre Oberfläche (in einem mit der Herstellung gedruckter Leiterplatten vergleichbaren Verfahren) mit Leiterbahnen auf ihrer Oberfläche versehen werden kann. Von der Kunststoffindustrie werden hierzu metallisierbare Kunststoffe genannt, die beispielsweise mit einem leicht fließenden weiteren Kunststoff derart umgossen werden können, daß von dem metallisierbaren Leiterformkörper Flächen an der Oberfläche des gesamten Gußteils stehenbleiben, die später metallisiert werden können und als Leiterbahnen oder Kontaktflächen dienen können.

Aus der DE 32 12 962 A1 ist eine Leuchte für Kraftfahrzeuge bekannt, die eine Lampenhalterung, einen Reflektor und Verbindungsleitungen aufweist. Eine derart aufgebaute Leuchte erfüllt ihren Zweck, jedoch ist deren Herstellung, da sie aus vielen Einzelteilen besteht, zeitaufwendig und daher teuer.

Aufgabe der Erfindung ist es daher, eine Leuchte anzugeben, bei der die erläuterte Technik einsetzbar ist und die durch die Integration der eingangs genannten Bauelemente bei großen Stückzahlen preiswert herzustellen und einfach zu montieren ist.

Die Aufgabe wird erfindungsgemäß mit einer Leuchte gelöst, die die Merkmale des Anspruchs 1 aufweist.

Die Erfindung besteht im Prinzip also darin, in das Gehäuse einer Leuchte einen geeignet geformten Leiterformkörper einzugießen, bei dem die zur Halterung der Glühlampe benötigten federnden Laschen an den Gehäusekörper angegossen sind. Da die Laschen durch den Leiterformkörper gebildet werden, der eine metallisierbare Oberfläche besitzt, kann die Glühlampe mit Strom versorgt werden, obwohl zu dieser keine zusätzlichen metallischen Leiter hinführen, sondern nur eine auf den Leiterformkörper aufgebrachte Leiterbahn (ähnlich gedruckte Leiterplatten) .

Eine gleichwertige zweite Lösung der gestellten Aufgabe wird mit einer Leuchte vorgeschlagen, die die Merkmale des Anspruchs 2 aufweist. Das erfinderische Prinzip besteht in diesem Falle darin, die Metallisierbarkeit der Kunststoffoberfläche gleichzeitig als Reflektor für die Glühlampe auszunutzen. Es wird damit zumindest ein Teil des Leiterformkörpers als Reflektor geformt und wird mit dem Leuchtengehäuse als eine Einheit vergossen. Danach wird der Reflektorabschnitt mit einem Metall metallisiert, welches zur Reflektion von Lichtstrahlen geeignet ist. Hierbei kann man beispielsweise Chrom, Silber oder Aluminium verwenden. Aber auch andere Stoffe sind geeignet, soweit sie nur hinreichend reflektieren. Die genannte Lösung liegt auch schon dann im Rahmen der Erfindung, wenn der Leiterformkörper aus einem Kunststoff gebildet ist, welcher einer helle, zur Reflektion geeignete Farbe besitzt, wie beispielsweise weiß.

Diese zweite Lösung ist besonders zweckmäßig, wenn die metallisierten Abschnitte gleichzeitig mehrere Aufgaben erfüllen. So können beispielsweise die metallisierten Abschnitte gleichzeitig als Leiterbahn zur Führung des Stroms zu der Glühlampe und als Reflektor dienen. Eine zusätzliche und ergänzende Möglichkeit besteht darin, die große Metallfläche gleichzeitig zu Kühlzwecken auszunutzen.

Bei einer Weiterbildung der Erfindung, ist den beiden Kontaktenden einer vorzugsweise längsgestreckten Glühlampe jeweils ein metallisierter Abschnitt zugeordnet, über den sich der benötigte Strom zu den zugehörigen Kontakten führen läßt. Entsprechendes gilt auch, wenn, gemäß der Merkmalskombination nach Anspruch 1, die Abschnitte zur Zufuhr von Strom zu den beiden an den Lampenkontakten anliegenden Laschen dienen.

In Fortbildung der Erfindung läßt sich weiterhin die Verwendung der als Reflektoren eingesetzten Abschnitte mit dem Merkmal der die Glühlampe durch Klemmverbindung haltenden Laschen kombinieren. Danach sind die Laschen aus den Reflektorabschnitten herausgeformt, so daß Lampengehäuse, Reflektor, Leiterbahnen und die klemmenden Laschen eine integrierte Einheit bilden.

Für eine weitere Lösung der eingangs gestellte Aufgabe wird eine Leuchte vorgeschlagen, die die Merkmale des Anspruchs 6 aufweist. Danach ist in das Gehäuse der Leuchte - oder kann wahlweise oder aber auch zusätzlich zu den weiter oben beschriebenen Baugruppen - noch ein Kontakt bzw. mehrere Kontakte eines Schalters integriert (sein), wobei der bewegliche Kontakt durch eine entsprechende Ausgestaltung im Gehäuse selbst geführt wird. Es ist aber zusätzlich auch möglich, den beweglichen Kontakt direkt als federnden Vorsprung oder Kontaktarm in einem Gehäuse anzuformen, so daß nur ein Betätiger bewegt werden muß, der durch seine Bewegung den federnd aufgehängten beweglichen Kontakt in Verbindung mit dem ortsfesten Kontakt bringt. Auf diese Weise ist es möglich, zusätzlich zu den o.g. Elementen einen Schalter in das Gehäuse zu integrieren, wobei gleichzeitig auch noch ein Ansatz an dem Kontaktarm als manuell betätigbares Betätigungsglied aus der Kontur der Innenleuchte hervorragen kann.

Eine weitere Merkmalskombination, die vorteilhaft mit den vorangegangen Merkmalen kombinierbar ist, ergibt sich aus Anspruch 7. Danach lassen sich mit Hilfe des bzw. der Leiterformkörper auch die Steckerabgänge an der erfindungsgemäßen Leuchte integrieren, indem an das Gehäuse mittels der Leiterformkörper metallisierbare (messerartige) Vorsprünge oder auch metallisierbare Öffnungen ausgeformt werden, die sich als Kontaktmesser oder Kontaktbuchsen einsetzen lassen.

Schließlich können die genannten in das Gehäuse der Leuchte eingeformten Bauelemente mittels der Leiterformkörper noch über Leiterbahnen gemäß Anspruch 9 verbunden werden, die als metallisierbare Verbindungsflächen zwischen den Elementen ausgestaltet sind.

Weiter Merkmale ergeben sich aus den Ansprüchen. Ein Ausführungsbeispiel der Erfindung wird nachfolgend anhand der Zeichnung erläutert. Darin zeigt
- Fig. 1: in skizzierter Form die Draufsicht auf eine Innenleuchte bei abgenommenen Abdeckungen,
- Fig. 2: einen Schnitt durch die Leuchte nach Fig. 1 entlang der Linie A-A,
- Fig. 3: einen Schnitt durch die Leuchte nach Fig. 1 entlang der Linie B-D-E-F-G-H und
- Fig. 4: einen Schnitt durch die Leuchte nach Fig. 1 entlang der Linie C-C.

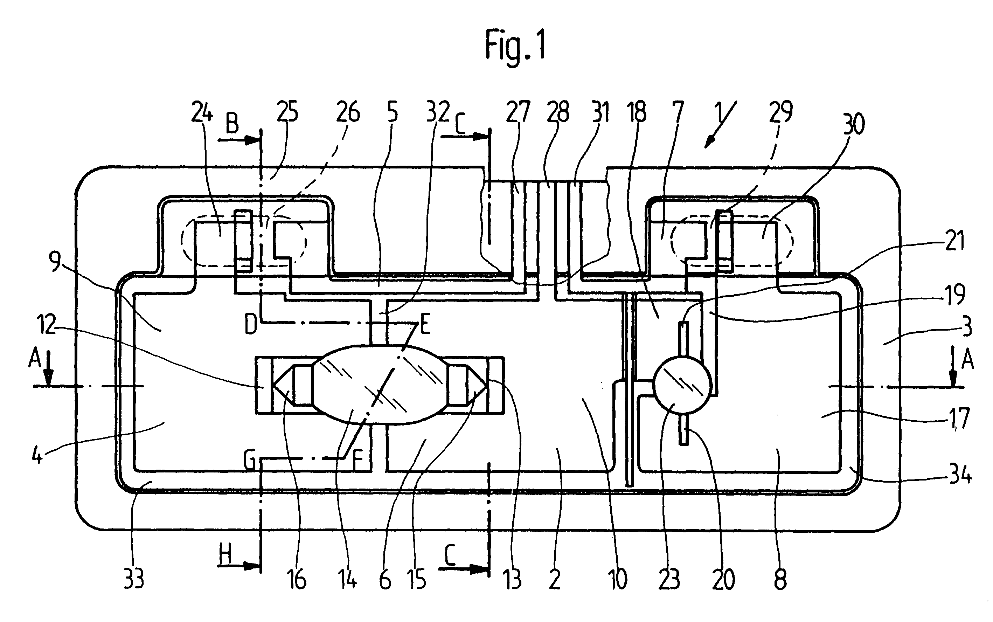

Fig. 1 zeigt das Gehäuse 1, bei dem ein spritzgegossener Leiterformkörper in einer Two-shot-Technologie zum Teil durch gut fließfähiges Kunststoffmaterial umhüllt ist. Es wird somit als erstes der Leiterformkörper gegossen, dessen Oberfläche metallisierbar ist. Nachfolgend wird in einem zweiten Spritzguß-Vorgang der Leiterformkörper an all jenen Stellen mit fließfähigem Kunststoff abgedeckt, die nicht metallisiert werden sollen. Die nicht durch den fließfähigen Kunststoff abgedeckten Flächen bilden somit die künftigen stromleitenden Flächen, wobei durchaus einzelne Bereiche voneinander elektrisch isoliert sein können, so daß mehrere voneinander elektrisch getrennte Leiterbahnen entstehen. Dabei ist die Kontur der Leiterbahnen durch die Kontur der metallisierbaren Bereiche des Leiterformkörpers vorgegeben. Da während des Galvanisierungsprozesses sich bei geeignetem Aufbau des Galvansisierungsbades die abgeschiedenen Metallteile gleichmäßig auf den metallisierbaren Flächen verteilen, können auf diese Weise hochkomplizierte räumliche Leiterbahnstrukturen erreicht werden. Dabei bleibt es dem Anwender freigestellt, entweder einen einzigen Leiterformkörper während des zweiten Spritzvorganges durch entsprechende Stege in geeignete Leiterbezirke zu unterteilen oder aber auch mehrere Leiterformkörper im zweiten Spritzgang miteinander zu verbinden. Fig. 1 zeigt das Gehäuse 1, bei dem ein spritzgegossener Leiterformkörper 2 durch einen Hüllkörper 3 teilweise umschlossen wird. Der Hüllkörper 3 ist in einem zweiten Spritzgang um den Leiterformkörper 2 so weit herumgespritzt, als dieser an seiner Oberfläche nicht metallisiert werden soll. Der Hüllkörper 3 deckt also insoweit den Leiterformkörper 2 ab, daß dieser frei von Metallabscheidungen gehalten werden soll.

Nach einem späteren galvanischen Prozeß besitzt der Leiterformkörper 2 fünf elektrisch leitende Bereiche, die in einer Leuchte unterschiedliche Aufgaben wahrnehmen. So bilden beispielsweise die Bereiche 4 und 6 hauptsächlich zwei Abschnitte 9 und 10 eines im wesentlichen in Form einer Wanne 11 ausgeführten Reflektors. Die beiden Abschnitte 9 und 10 sind dabei mit einem geeigneten Metall, wie Silber oder Chrom beschichtet, welches elektrisch leitet und gut reflektiert.

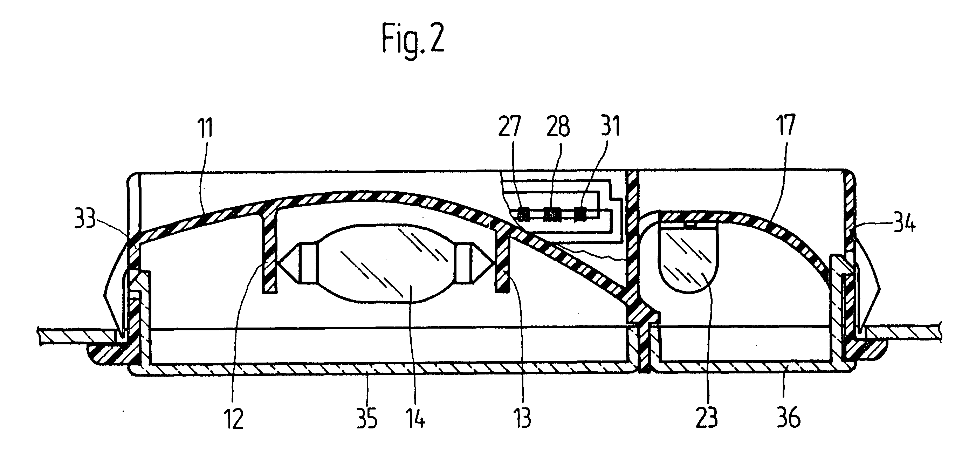

An die Abschnitte 9 und 10 sind, wie Fig. 1 und Fig. 2 zeigen, jeweils Klemmlaschen 12, 13 angeformt, die von der Wanne 11 vorstehen und gegenüber dieser federnd ausgelenkt werden können. Die Laschen 12, 13 sind ebenso, wie die Fläche der Wanne 11, an ihrer Oberfläche mit einem leitenden Metall beschichtet, wobei es sich bei Wanne 11 und Lasche 12 bzw. 13 vorzugsweise um das gleiche Metall handelt. Zwischen die Laschen 12 und 13 ist mit ihren Kontaktenden 15, 16 eine Glühlampe 14 eingeklemmt und damit elektrisch angeschlossen.

Eine zweite Wanne 17 übernimmt die gleiche Aufgabe wie die erste Wanne 11, wobei die dem Betrachter zugewandte Fläche der Wanne 17 sich aus einem leitenden Teilabschnitt 18 des leitenden Abschnitts 10 und dem leitenden Bereich 8 zusammensetzt. Der Teilabschnitt 18 und der leitende Bereich 8 sind durch einen gewinkelten Steg 19 des Hüllkörpers 3 elektrisch voneinander getrennt, auf dem sich kein leitendes Metall während des Galvanikprozesses niederschlagen kann. Der Teilabschnitt 18 ist somit elektrisch als Teil des leitenden Bereiches 6 von dem leitenden Bereich 8 getrennt. Die Leiterenden 20, 21 einer Glühlampe 23 sind elektrisch leitend mit dem Teilabschnitt 18 und dem leitenden Bereich 8 verbunden. Liegt an dem Bereich 8 gegenüber dem Teilabschnitt 18 eine Spannung an, so wird die Lampe 23 leuchten.

Der leitende Bereich 4 besitzt einen Teilabschnitt 24, der als ebenes Teil ausgestaltet ist. Entsprechendes gilt für einen leitenden Bereich 5. Der Teilabschnitt 24 sowie ein Teil des Bereiches 5 sind von einer senkrecht zu dieser stehenden Schalterwand 25 umgeben, wobei der leitende Bereich 5 und der leitende Bereich 4 über die Schalterwand 25 geführt sein können, was durch eine entsprechende Ausgestaltung des Hüllkörpers 3 geschieht.

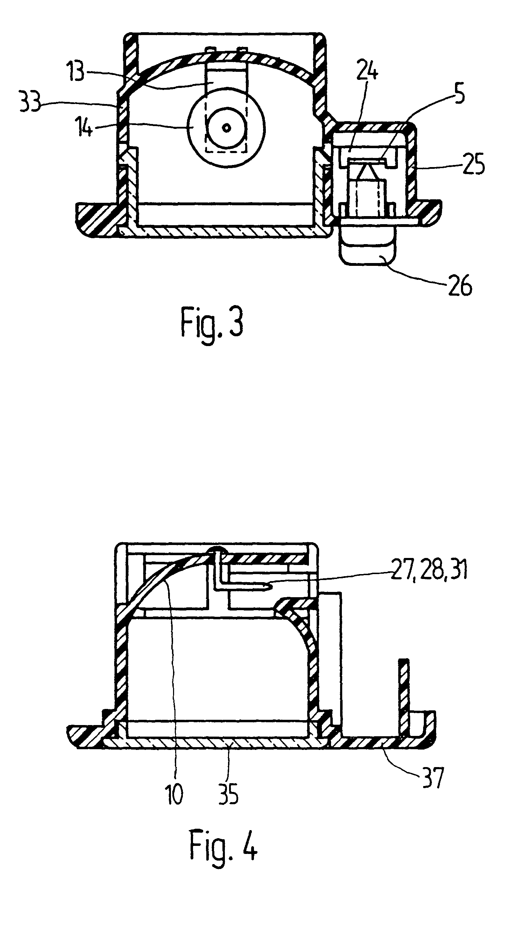

Die Schalterwand 25 kann, wie in Fig. 3 angedeutet, gleichzeitig zur Lagerung eines beweglichen Schaltstücks 26 (Kontaktbrücke) dienen, das je nach der eingenommenen Stellung den Teilabschnitt 24 mit dem leitenden Bereich 5 elektrisch über eine Kontaktbrücke verbindet oder nicht. Der leitende Bereich 5 und der leitende Bereich 6 gehen in Steckerkontakte 27, 28 über. Legt man an die Steckerkontakte 27, 28 eine Spannung an, so wird die Glühlampe 14 aufleuchten, soweit das bewegliche Schaltstück als Schalter den Teilabschnitt 24 mit dem Bereich 5 elektrisch leitend verbindet. Man erhält somit in integrierter Form eine Innenleuchte, bei der die Glühlampe 14 über Steckerkontakte 27, 28 und einen Schalter sowie die Laschen 12 und 13 an Strom angeschlossen werden kann, wobei die stromführenden Bereiche 4 und 6 zum Teil auch noch als Reflektor für die Glühlampe 14 dienen.

Entsprechendes ergibt sich hinsichtlich des Teilabschnitts 18 und des leitenden Bereiches 8. Auch hier kann ein gestrichelt angedeutetes Schaltstück 26 vorgesehen sein, welches einen Teilabschnitt 30 des Bereichs 8 mit einem leitenden Bereich 7 verbindet, dem wiederum ein Steckerkontakt 31 zugeordnet ist.

Der gerade Steg 32 des Hüllkörpers 3 erfüllt die gleiche elektrisch trennende Funktion wie der gewinkelte Steg 19.

Um Hinterschneidungen zu vermeiden, ist der Gehäuseboden des Gehäuses 1 in Höhe der ersten Wanne 11 und der zweiten Wanne 17 offen, so daß die nichtreflektierenden Rückseiten der beiden Wannen von der den Lampen 14, 23 abgewandten Seite des Gehäuses 1 frei zugänglich sind.

Das Gehäuse 1 besitzt eine elektrisch nichtleitende erste umlaufende Wand 33 und zweite umlaufende Wand 34, in welche Abdeckungen 35, 36 einrastbar sind. Von der Oberkante der umlaufenden Wände 33, 34 geht noch eine umlaufende Blende 37 ab, die in Fig. 1 aufgeschnitten ist, um die Messerkontakte 27, 28 und 31 sichtbar zu machen.

Der Erfindung liegt das Prinzip zugrunde, bei einer Leuchte die Leiterbahnen auf die Oberfläche des Leuchtengehäuses 1 zu verlegen und in Weiterbildungen die an der Oberfläche befindlichen Leiterbahnen gleichzeitig als Reflektoren, als Kühlfläche oder Steckerkontakte auszunutzen. Für derartige Leiterbahnen auf der räumlichen Oberfläche des Leuchtengehäuses 1 wurde weiter oben die Verwendung von Leiterformkörpern 2 beschrieben, die in das Leuchtengehäuse 1 eingegossen werden.

Die nach diesem bekannten Verfahren gewonnenen Leiterbahnen erfüllen im Ergebnis die gleiche Funktion wie die mit Hilfe der Leiterformkörper 2 erhaltenen Leiterbahnen. Die Leiterformkörper 2 sind insbesondere dann zu bevorzugen, wenn sie aus einem Material gebildet sind, welches noch zusätzliche Aufgaben zu erfüllen vermag. Dies kann beispielsweise die Lichtleitung im Inneren des Gehäuses 1 der Leuchte oder eines anderen Bauelementes sein oder eine abweichende Farbgebung gegenüber den umgebenden Gehäuseabschnitten oder aber auch eine größere Transparenz als das umgebende Gehäuse 1. Die Verwendung des Semiadditiv-Verfahrens dürfte sich insbesondere bei einer komplexen Gestaltung der Leiterbahnen empfehlen.

## Patentansprüche

1. Leuchte mit einer Lampenhalterung, einem Reflektor und Verbindungsleitungen, insbesondere Kfz-Innenleuchte, dadurch gekennzeichnet,
- daß in ein Leuchtengehäuse (1) mindestens ein spritzgegossener Leiterformkörper (2) eingegossen ist, der metallisierbar ist, und
- daß der bzw. die Leiterformkörper (2) zu seiner bzw. ihrer Funktion als Träger für eine aufgebrachte Leiterbahn oder aufgebrachte Leiterbahnen eine zusätzliche Aufgabe für die Leuchte erfüllt, indem mindestens ein Paar einander gegenüberstehender federnder, metallisierter, elektrisch nicht miteinander verbundener Laschen (12, 13), zwischen welchen eine Glühlampe (14) mit ihren Kontakten (15, 16) einklemmbar ist, durch den spritzgegossenen Leiterformkörper (2) gebildet sind und von diesem abstehen.

2. Leuchte mit einer Lampenhalterung, einem Reflektor und Verbindungsleitungen, insbesondere Kfz-Innenleuchte, dadurch gekennzeichnet,
- daß in ein Leuchtengehäuse (1) mindestens ein spritzgegossener Leiterformkörper (2) eingegossen ist, der metallisierbar ist, und
- daß der bzw. die Leiterformkörper (2) zu seiner bzw. ihrer Funktion als Träger für eine aufgebrachte Leiterbahn oder aufgebrachte Leiterbahnen eine zusätzliche Aufgabe für die Leuchte erfüllt, indem der Leiterformkörper (2) bzw. die Leiterformkörper (2) mit mindestens einem zum Boden des Gehäuses (1) hin konvex gebogenen breitflächigem Abschnitt (9, 10) des Reflektors versehen ist bzw. sind, welcher auf seiner dem Gehäuseboden abgewandten Fläche metallisiert ist, und daß zumindest ein Teil der Lampe (14) der metallisierten Seite des Abschnitts gegenüberliegend angeordnet ist.

3. Leuchte nach Anspruch 1 oder 2, dadurch gekennzeichnet, daß der metallisierte Abschnitt (9, 10) sowohl als Leiterbahn als auch als Reflektor und/oder Kühlfläche dient.

4. Leuchte nach einem der vorhergehenden Ansprüche, dadurch gekennzeichnet, daß zwei im wesentlichen symmetrisch zueinander angeordnete Abschnitte (9, 10) des Reflektors vorgesehen sind, die voneinander elektrisch isolierte metallisierte Flächen tragen, welche den beiden Lampenkontakten (15, 16) zugeordnet sind.

5. Leuchte nach einem der Ansprüche 2 bis 4, dadurch gekennzeichnet, daß an die Abschnitte (9, 10) Laschen (12, 13) angeformt sind.

6. Leuchte mit einer Lampenhalterung, einem Reflektor und Verbindungsleitungen, insbesondere Kfz-Innenleuchte, dadurch gekennzeichnet,
- daß in ein Leuchtengehäuse (1) mindestens ein spritzgegossener Leiterformkörper (2) eingegossen ist, der metallisierbar ist, und
- daß der bzw. die Leiterformkörper (2) zu seiner bzw. ihrer Funktion als Träger für eine aufgebrachte Leiterbahn oder aufgebrachte Leiterbahnen eine zusätzliche Aufgabe für die Leuchte erfüllt, indem wenigstens zwei ebene Teile des Leiterformkörpers (2) vom Innenraum des Gehäuses (1) her frei zugänglich und metallisiert sind, daß die ebenen Teile geometrisch zueinander benachbart, aber elektrisch voneinander isoliert sind und daß ein im Gehäuse (1) beweglich gelagertes Schaltstück (26) die beiden ebenen Teile (24,5) in Abhängigkeit von seiner Stellung miteinander verbindet.

7. Leuchte nach einem der vorhergehenden Ansprüche, dadurch gekennzeichnet, daß die metallisierten Teile, Abschnitte oder Laschen zu an den bzw. die Leiterformkörper angefügten Steckeransätze (27, 28, 31) geführt sind, die den Stecker für die Leuchte bilden.

8. Leuchte nach einem der vorhergehenden Ansprüche, dadurch gekennzeichnet, daß eine Glühlampe (23) mit ihren beiden Anschlußleitern (20, 21) an zwei benachbarte, metallisierte Bereiche (18, 8) des Leiterformkörpers (2) elektrisch sicher verbunden sind.

9. Leuchte nach einem der vorhergehenden Ansprüche, dadurch gekennzeichnet, daß in das Leuchtengehäuse (1) und/oder den Leiterformkörper (2) metallische elektrische Leiter eingegossen sind, deren aus dem Gehäuse ragende Enden mit der metallisierten Schicht oder einem Verbraucher oder einem Schalter verbunden sind.

10. Leuchte nach Anspruch 1, dadurch gekennzeichent, daß die Metallisierung des Leuchtengehäuses (1) und/oder der Laschen (12, 13) mit Hilfe eines an sich bekannten Semiadditiv-Verfahrens bewirkt ist.

## Claims

1. A lamp having a lamp holder, a reflector and connecting tracks, in particular a motor vehicle lamp, characterized in that,
- in a lamp housing (1) an injection-molded conductor molding (2) is encased, which is metallizable, and
- that the conductor molding(s) (2) additional to its function as a carrier of a conductor track(s) applied onto fulfils a further purpose for the lamp, in having at least a pair of clamp brackets (12, 13) being opposed to each other, spring-like, metallizable and electrically isolated from each other, suitable for engaging and being formed by and penetrate from the injection-molded conductor molding (2).

2. A lamp having a lamp holder, a reflector and connecting tracks, in particular a motor vehicle lamp, characterized in that,
- in a lamp housing (1) an injection-molded conductor molding (2) is encased, which is metallizable, and
- that the conductor molding(s) (2) additional to its function as a carrier of a conductor track(s) applied onto fulfils a further purpose for the lamp, in that the conductor molding(s) (2) having at least one wide surface section (9, 10) of the reflector curved in a convex fashion in direction to the bottom of the housing (1), which is metallized on its surface facing away from the bottom of the housing, and that at least one section of the lamp (14) is located in an opposed direction to the metallized side.

3. A lamp according to claim 1 or 2, characterized in that the metallized section (9, 10) serve as conductor track as well as reflector and/or cooling area.

4. A lamp according to one of the preceding claims, characterized in that two sections (9, 10) are provided at the reflector which are essentially symmetrically arranged to each other which carry metallized areas electrically isolated from each other which are associated to the two contact ends (15, 16) of the glow lamp (14).

5. A lamp according to one of the claims 2 to 4, characterized in that clamp brackets (12, 13) are integrated into the sections (9, 10).

6. A lamp having a lamp holder, a reflector and connecting tracks, in particular a motor vehicle lamp, characterized in that,
- in a lamp housing (1) an injection-molded conductor molding (2) is encased, which is metallizable, and
- that the conductor molding(s) (2) additional to its function as a carrier of a conductor track(s) applied onto fulfils a further purpose for the lamp, in that two flat parts of the conductor molding (2) are freely accessible from an interior of the housing (1) and are metallized, that the flat parts being geometrically adjacent but electrically isolated from each other, and that a movable switching element (26) disposed in the housing (1) connects the two flat parts (24, 5) dependent from its switching position.

7. A lamp according to one of the preceding claims, characterized in that the metallized parts, sections or brackets are lead to the plug contacts (27, 28, 31) connected to the conductor molding (2) forming the plug for the lamp.

8. A lamp according to one of the preceding claims, characterized in that a glow lamp (23) with its two conductor ends 820, 21) is secured and electrically connected to two adjacent metallized sections (18, 8) of the conductor molding (2).

9. A lamp according to one of the preceding claims, characterized in that metallized electric conductors are cast into the lamp housing (1) and/or the conductor molding (2) and ends of the conductor are connected to the metallized layer or a load or a switch.

10. A lamp according to claim 1, characterized in that the metallization of the lamp housing (1) and/or the brackets (12, 13) is performed by a known semi-additive method.

## Revendications

1. Lampe, comportant un support de lampe, un réflecteur et des conducteurs de liaison, en particulier une lampe d'éclairage intérieur pour véhicules automobiles, caractérisée en ce que:
- au moins un corps moulé à conducteurs intégrés (2), moulé par injection, est moulé dans un boîtier (1) de lampe, le corps pouvant être métallisé, et que
- le ou les corps moulé(s) à conducteurs intégrés (2), en tant que support pour une piste conductrice ou des pistes conductrices déposée(s) sur lui, remplit (remplissent) une fonction supplémentaire pour la lampe, dans laquelle au moins deux pattes (12, 13) opposées l'une à l'autre, faisant ressort, métallisées, électriquement non reliées l'une à l'autre, et entre lesquelles une ampoule (14) à incandescence peut être serrée par ses embouts de contact (15, 16), sont formées par le corps moulé (2) à conducteurs intégrés, moulé par injection, et font saillie par rapport à celui-ci.

2. Lampe, comportant un support de lampe, un réflecteur et des conducteurs de liaison, en particulier une lampe d'éclairage intérieur pour véhicules automobiles, caractérisée en ce que:
- au moins un corps moulé à conducteurs intégrés (2), moulé par injection, est moulé dans un boîtier (1) de lampe, le corps pouvant être métallisé, et que
- le ou les corps moulé(s) à conducteurs intégrés (2), en tant que support pour une piste conductrice ou des pistes conductrices déposée(s) sur lui, remplit (remplissent) une fonction supplémentaire pour la lampe, dans laquelle le ou les corps moulé(s) à conducteurs intégrés (2) est (sont) pourvu(s) d'au moins une section (9, 10) de réflecteur, qui est convexe en direction du fond du boîtier (1), présentant une surface large, métallisée sur sa surface tournée à l'opposé du fond du boîtier, et en ce qu'au moins une partie de l'ampoule (14) est agencée en face du côté métallisé de ladite section.

3. Lampe selon la revendication 1 ou 2, caractérisée en ce que la section métallisée (9, 10) sert à la fois de piste conductrice et de réflecteur et/ou de surface de refroidissement.

4. Lampe selon l'une des revendications précédentes, caractérisée en ce que deux sections (9, 10) de réflecteur, disposées de façon essentiellement symétrique l'une à l'autre, sont prévues et comportent des surfaces métallisées, électriquement isolées l'une de l'autre, qui sont respectivement associées aux deux embouts de contact (15, 16) de l'ampoule.

5. Lampe selon l'une des revendications 2 à 4, caractérisée en ce que les pattes (12, 13) sont conformées sur les sections (9, 10).

6. Lampe, comportant un support de lampe, un réflecteur et des conducteurs de liaison, en particulier une lampe d'éclairage intérieur pour véhicules automobiles, caractérisée en ce que:
- au moins un corps moulé à conducteurs intégrés (2), moulé par injection, est moulé dans un boîtier (1) de lampe, le corps pouvant être métallisé, et que
- le ou les corps moulé(s) à conducteurs intégrés (2), en tant que support pour une piste conductrice ou des pistes conductrices déposée(s) sur lui, remplit (remplissent) une fonction supplémentaire pour la lampe, dans laquelle au moins deux parties planes du corps moulé à conducteurs intégrés (2) sont librement accessibles depuis l'intérieur du boîtier (1) et sont métallisées, en ce que les parties planes sont disposées de façon géométriquement adjacente l'une à l'autre, mais électriquement isolée l'une de l'autre, et en ce qu'un élément de contact (26) logé de façon mobile dans le boîtier (1) relie les deux parties planes (24, 5) l'une à l'autre, en fonction de sa position.

7. Lampe selon l'une des revendications précédentes, caractérisée en ce que les parties, sections ou pattes métallisées conduisent jusqu'à des embouts de connecteurs (27, 28, 31) rapportés au(x) corps moulé(s) à conducteurs intégrés, formant ainsi la prise de raccordement pour la lampe.

8. Lampe selon l'une des revendications précédentes, caractérisée en ce qu'une ampoule à incandescence (23) est reliée, par ses deux embouts de connexion (20, 21), de façon lectriquement fiable, à deux sections métallisées voisines (18, 8) du corps moulé (2) à conducteurs intégrés.

9. Lampe selon l'une des revendications précédentes, caractérisée en ce que des conducteurs électriques métalliques sont noyés dans le boîtier (1) de la lampe et/ou dans le corps moulé (2) à conducteurs intégrés, et présentent leurs extrémités en saillie hors du boîtier et reliées à la couche métallisée ou à un récepteur ou à un contacteur.

10. Lampe selon la revendication 1, caractérisée en ce que la métallisation du boîtier (1) de la lampe et/ou des pattes (12, 13) est effectuée à l'aide d'un procédé dit semi-additif, connu en soi.
